# EUROPÄISCHE PATENTANMELDUNG

(11) **EP 0 833 535 A2**
(43) Veröffentlichungstag der Anmeldung: **01.04.1998**
(21) Anmeldenummer: 97116394.4
(22) Anmeldetag: 19.09.1997
(51) Int. Cl.: H04Q 7/24, H04B 7/26, H04J 3/06, H04Q 7/30

(54) **Verfahren zum Synchronisieren einer Funknetzabschlusseinrichtung eines in einem ISDN-System eingebundenen RLL/WLL-Systems**

(30) Priorität: 30.09.1996 DE 19640314
(71) Anmelder: SIEMENS AKTIENGESELLSCHAFT, 80333 München (DE)
(72) Erfinder: Albersmann, Josef, Dipl.-Ing., 48691 Vreden (DE); Kockmann, Jürgen, Dipl.-Ing., 48599 Gronau (DE); Kruk, Anton, Dipl.-Ing., 40699 Erkrath (DE)

(57) **Zusammenfassung**

Werden die zu einer ISDN-Verbindung gehörenden ISDN-Kanalinformationen (D,B,B) über verschiedene Basisstationen (RBS) zu einer Funkempfangseinrichtung (RNT) übermittelt, treten beim Empfang aufgrund unterschiedlicher Entfernungen Laufzeitunterschiede zwischen den ISDN-Kanalinformationen auf. Um die ISDN-Kanalinformationen zur Bildung eines ISDN-Anschlusses synchron zusammenzufügen, wird eine Referenz-Synchronisationsinformation gebildet und basisstationsindividuelle Laufzeit-Differenzwerte ermittelt. Die ISDN Kanalinformationen werden jeweils für eine dem zugehörigen Laufzeit-Differenzwert entsprechende Wartezeit zwischengespeichert.

## Beschreibung

Die Erfindung betrifft ein Verfahren zum Synchronisieren einer Funkempfangseinrichtung gemäß dem Oberbegriff des Patentanspruchs 1.

Die Verwendung von Funkstrecken in klassischen leitungsgebundenen Telekommunikationssystemen, wie dem ISDN, gewinnt zunehmend an Bedeutung, insbesondere für Netzbetreiber ohne eigenes komplettes Drahtnetz.

Mit der bekannten drahtlosen Anschlußtechnik RLL/WLL (Radio in the Local Loop/Wireless in the Local Loop) z.B. unter der Einbindung eines DECT-Systems (Digital Enhanced Cordless Telecommunication), sollen den Kommunikationsteilnehmern auch ISDN-Dienste an Standard-ISDN-Schnittstellen zur Verfügung gestellt werden. Ein derartiges System ist z. B. aus der Produktschrift der Firma Siemens AG, "DECTlink Radio Access: Where Performance Counts", Dezember 95, Order Nr. A50001-N7-P1-1-7600 bekannt.

Ein RLL/WLL-System kann alternativ zu einem DECT-System auch als GSM-System (Group Special Mobil bzw. Global System for Mobile Communication) ausgebildet sein. Darüber hinaus kommen als weitere Möglichkeiten für die Realisierung eines RLL/WLL-Systems auch zukünftige Systeme in Frage, die auf den bekannten Vielfachzugriffsmethoden FDMA, TDMA, CDMA (Frequency Division Multiple Access, Time Division Multiple Access, Code Division Multiple Access) und hieraus gebildeten hybriden Vielfachzugriffsmethoden basieren.

Grundsätzlich erlaubt eine hochleistungsfähige Luftschnittstelle, wie z.B. das DECT-System, mit maximal 10 Frequenzen zu je 12 Kanälen, eine simultane Funkverbindung zwischen einer Mehrzahl von der Netzbetreiberseite zugehörigen sogenannten Funkbasisstationen (Radio Base Stations) und einer Mehrzahl von der Kommunikationsteilnehmerseite zugehörigen sogenannten Funknetzabschlußeinrichtungen (Radio Network Termination), an die jeweils über Leitungen Kommunikationsendgeräte oder herkömmliche Kommunikationsanlagen angeschlossen sind. Dabei ist bezüglich ISDN-Verbindungen vorgesehen, daß die zu einer jeweiligen ISDN-Verbindung gehörenden Kanalinformationen (bei einer bekannten ISDN-S0-Schnittstelle sind dies zwei als B bezeichnete Datenkanäle und ein als D bezeichneter Signalisierungskanal) nur zusammen von der gleichen Funkbasisstation aus zu einer Funknetzabschlußeinrichtung übertragen werden können.

Aufgabe der vorliegenden Erfindung ist es, für eine getrennte Übertragung von zu einer jeweiligen ISDN-Verbindung gehörenden Kanalinformationen über wenigstens zwei Funkbasisstationen in der Funknetzabschlußeinrichtung Maßnahmen vorzusehen, die ein zeitgerechtes Zusammenführen der Kanalinformationen ermöglichen.

Gelöst wird diese Aufgabe erfindungsgemäß durch die kennzeichnenden Merkmale des Patentanspruchs 1.

Die Erfindung geht von der Erkenntnis aus, daß bei einer Auftrennung eines ISDN-Informationsstromes in die einzelnen Kanäle, (z.B. 2B + D) und einer Verteilung dieser Kanäle auf wenigstens zwei verschiedene, zueinander synchrone Funkbasisstationen, die Kanalinformationen vor allem aufgrund verschiedener Distanzen der Funkbasisstationen zur Funknetzabschlußeinrichtung und daraus resultierender unterschiedlicher Signallaufzeiten, zeitversetzt bei der Funknetzabschlußeinrichtung eintreffen können. Ein synchrones Zusammenfügen der von unterschiedlichen Funkbasisstationen empfangenen Kanäle bzw. deren Kanalinformationen zu einem mehrkanaligen ISDN-Datenstrom, z.B. für einen ISDN-S0-Anschluß, ist insbesondere unter Berücksichtigung der geforderten ISDN-Taktgenauigkeiten am ISDN-Anschluß, also gegenüber den angeschlossenen ISDN-Endgeräten bzw. dem angeschlossenen ISDN-Kommunikationssystem vorzunehmen.

Das erfindungsgemäße Verfahren sieht vor, daß für die zeitlich versetzten Eintreffzeitpunkte der während eines jeweiligen - sich periodisch wiederholenden - Zeitraster von verschiedenen Funkbasisstationen übermittelten 'Kanalinformations-Portionen' ein Referenz-Eintreffzeitpunkt ermittelt wird. Dieser Referenz-Eintreffzeitpunkt ist so gewählt, daß die Eintreffzeitpunkte aller 'Kanalinformations-Portionen' während einer Zeitrasterperiode nicht später liegen. Der Referenz-Eintreffzeitpunkt ist dabei anhand der Differenzzeiten zu den Eintreffzeitpunkten der während der Zeitrasterperiode von den verschiedenen Funkbasisstationen übermittelten 'Kanalinformations-Portionen' definiert.

Die Differenzzeiten werden gemessen und in Form von funkbasisstationsindividuellen Differenzzeitwerten gespeichert. Die von den Funkbasisstationen übermittelten 'Kanalinformations-Portionen' werden nach ihrem Empfang für die funkbasisstationsindividuelle Differenzzeit - entsprechend dem zugehörigen funkbasisstationsindividuellen Differenzzeitwert - zwischengespeichert, um danach anhand eines auf den Referenz-Eintreffzeitpunkt bezogenen Referenztaktes synchron zusammengeführt und an dem ISDN-Anschluß ausgegeben werden zu können.

Prinzipiell kann als Referenz-Eintreffzeitpunkt ein fiktiver oder tatsächlicher Eintreffzeitpunkt gewählt werden. Ein fiktiver Referenz-Eintreffzeitpunkt läßt sich z.B. dadurch ermitteln, daß eine maximal mögliche Signallaufzeit (entsprechend der maximal möglichen Senderreichweite) zu einem - beliebigen- tatsächlichen Eintreffzeitpunkt einer 'Kanalinformations-Portion' addiert wird.

Es kann aber auch derjenige tatsächliche Eintreffzeitpunkt als Referenz-Eintreffzeitpunkt gewählt werden, der gegenüber den anderen tatsächlichen Eintreffzeitpunkten in der selben Zeitrasterperiode der letzte ist.

Ein wesentlicher Vorteil des erfindungsgemäßen Verfahrens ist darin zu sehen, daß bei einem Ausfall einer Funkbasisstation oder bei einem Verbindungsabbruch zu einer Funkbasisstation die Taktgenauigkeit des ISDN-Informationsstromes am ISDN-Anschluß der Funknetzabschlußeinrichtung weiterhin gewährleistet werden kann, da mit Hilfe der von den anderen Funkbasisstationen übertragenen Informationen und den gespeicherten funkbasisstationsindividuellen Differenzzeitwerten der Referenz-Eintreffzeitpunkt und damit der Referenztakt für den ISDN-Informationsstrom sofort rechnerisch konstruiert werden kann.

Vorteilhafte Weiterbildungen der Erfindung sind in den Unteransprüchen angegeben.

Ein Ausführungsbeispiel der Erfindung wird im folgenden anhand der Zeichnung näher erläutert, wobei insbesondere noch weitere, durch die Erfindung erzielbare Vorteile dargelegt werden.

Dabei zeigen
- FIG 1: eine Architektur eines Telekommunikationssystems unter Einbindung eines RLL (Radio in the Local Loop) Teilsystems
- FIG 2: ein Blockschaltbild zur Veranschaulichung der wesentlichen Elemente eines RLL-Teilsystems nach Fig 1
- FIG 3: die TDMA-Rahmenstruktur eines DECT/GAP-Systems
- FIG 4: die Informationsrahmenstruktur an einer ISDN-S0-Schnittstelle
- FIG 5: ein Ablaufdiagramm zur Veranschaulichung wesentlicher Schritte bei einem nach der Erfindung ausgestalteten Verfahren.

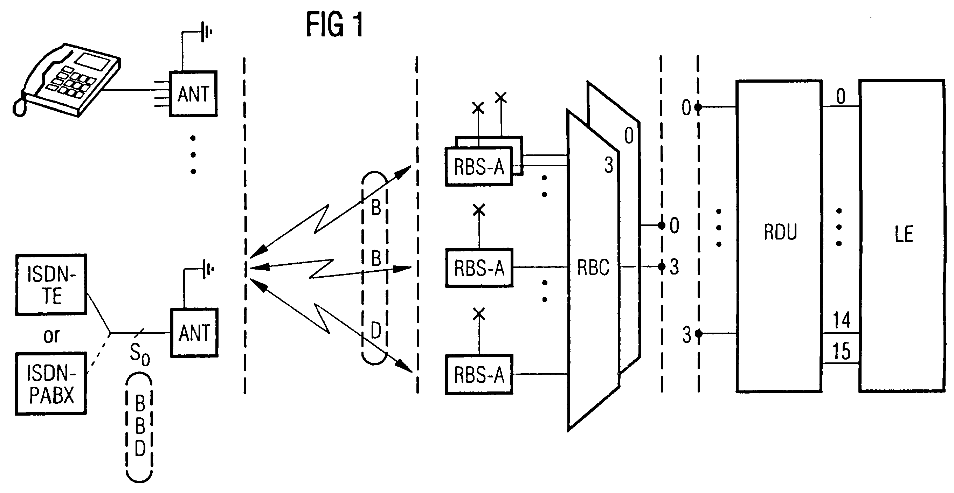

In FIG 1 ist die Architektur eines aus der eingangs genannten Produktschrift der Firma Siemens AG "DECTlink Radio Access" bekannten Telekommunikationssystems dargestellt. Im einzelnen zeigt diese Architektur von rechts nach links eine örtliche Vermittlungseinrichtung LE, z.B. eine ISDN-Vermittlungseinrichtung eines Netzbetreibers. An diese ist drahtgebunden, z.B. über eine V5.1- oder V5.2-Schnittstelle eine Funkverteileinrichtung RDU (Radio Distribution Unit) angeschlossen. Von dieser bestehen auch als "Transmission Link" bezeichnete Verbindungen zu insgesamt vier Funkbasisstationskontrolleinrichtungen RBC (Radio Base Station Controller). Diese Verbindungen können mit optischen Kabeln, drahtgebunden oder durch Funk realisiert sein.

An die Funkbasisstationskontrolleinrichtungen RBC sind jeweils eine Mehrzahl von Funkbasisstationen RBS-A,...,RBS-C (Radio Base Station) drahtgebunden, z.B. bis zu einer Entfernung von 5 km, angeschlossen. Von den Funkbasisstationen RBS-A,...,RBS-C ist eine Funkübertragung zu Funknetzabschlußeinrichtungen RNT (Radio Network Termination) vorgesehen. Die Funkübertragung kann zwischen den Funkbasisstationen RBS-A,...,RBS-C und den Funknetzabschlußeinrichtungen RNT unmittelbar oder ggf. über Funkrelaisstationen (Radio Network Repeater) (nicht dargestellt) erfolgen. An die Funknetzabschlußeinrichtungen RNT sind Telekommunikationsendgeräte wie herkömmliche Telefone, ISDN-Telekommunikationsendgeräte ISDN-TE oder ISDN-Nebenstellenanlagen ISDN-PABX angeschlossen.

Die Funknetzabschlußeinrichtung RNT stellt zum Aßschluß von ISDN-Engeräten bzw. Nebenstellenanlagen einen ISDN-S0-Anschluß - zwei Nutzkanäle mit je 64Kbit/sec und ein Signalisierungskanal mit 16Kbit/sec d.h. 2B+D-Kanäle - zur Verfügung. Der ISDN-S0-Anschluß, der auch als ISDN-Basisanschluß bezeichnet wird, betrifft den Standardfall, auf den im weiteren eingegangen wird. Es ist u.a. jedoch auch eine Realisierung eines sogenannten ISDN-Primär-Multiplex-Anschlusses - auch S2M-Anschluß genannt - mit 30 Nutzkanälen und einem D-Kanal zu je 64 Kbit/sec möglich.

In der Figur ist die für vorliegende Erfindung im besonderen relevante Situation symbolisch dargestellt, bei der im Zuge einer ISDN-Verbindung deren Kanäle über wenigstens zwei unterschiedliche Funkbasisstationen RBS-A,...,RBS-C an eine Funknetzabschlußeinrichtung RNT übertragen werden.

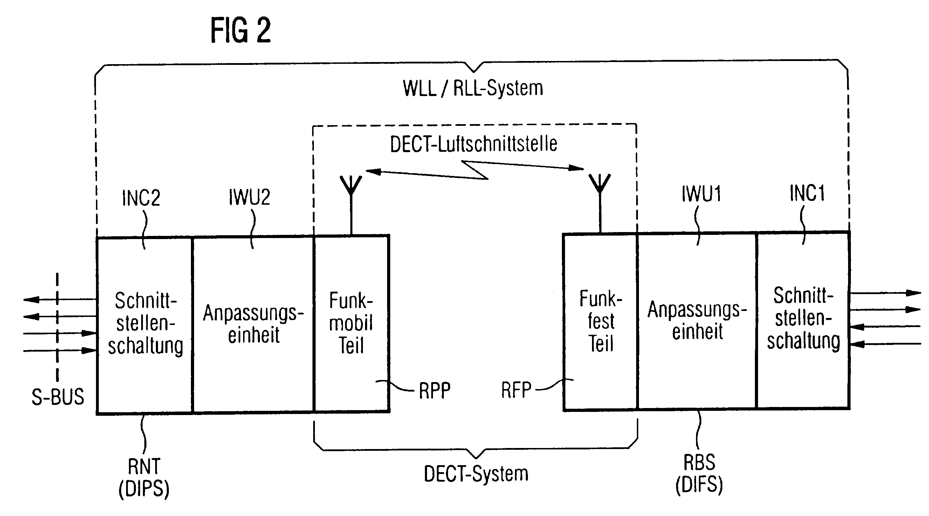

In FIG 2 sind in Form eines Blockschaltbildes die wesentlichen Elemente eines RLL/WLL-Systems (Radio in the Local Loop/Wireless in the Local Loop)dargestellt. Dieses System besteht im wesentlichen aus zwei Telekommunikations-Schnittstellenmodulen, einem ersten Telekommunikations-Schnittstellenmodul DIFS (DECT Intermediate Fixed System) und einem zweiten Telekommunikations-Schnittstellenmodul DIPS (DECT Intermediate Portable System), die drahtlos z. B. über eine DECT-Luftschnittstelle miteinander verbunden sind. Das erste Telekommunikations-Schnittstellenmodul DIFS ist in der in FIG 1 dargestellten Architektur als Funkbasisstation RBS bezeichnet und das zweite Telekommunikations-Schnittstellenmodul DIPS ist als Funknetzabschlußeinrichtung RNT bezeichnet.

Das erste Telekommunikations-Schnittstellenmodul DIFS enthält ein Funk-Fest-Teil RFP (Radio Fixed Part), eine Anpassungseinheit IWU1 (Interworking Unit) und eine Schnittstellenschaltung INC1 (Interface Circuitry) zur Bildung einer Schnittstelle in Richtung zum Netzbetreiber z.B. zur ISDN-Vermittlungseinrichtung des Netzbetreibers. Die Schnittstelle kann z.B. eine ISDN-S0-Schnittstelle oder U-Schnittstelle sein.

Das zweite Telekommunikations-Schnittstellenmodul DIPS enthält ein Funk-Mobil-Teil RPP (Radio Portable Part), eine Anpassungseinheit IWU2 (Interworking Unit) und eine Schnittstellenschaltung INC2 (Interface Circuitry) zur Bildung einer ISDN-S0-Schnittstelle, d.h. zur Bildung eines ISDN-S0-Anschlusses. Der Funk-Fest-Teil RFP und das Funk-Mobil-Teil RPP bilden dabei das bekannte DECT-System.

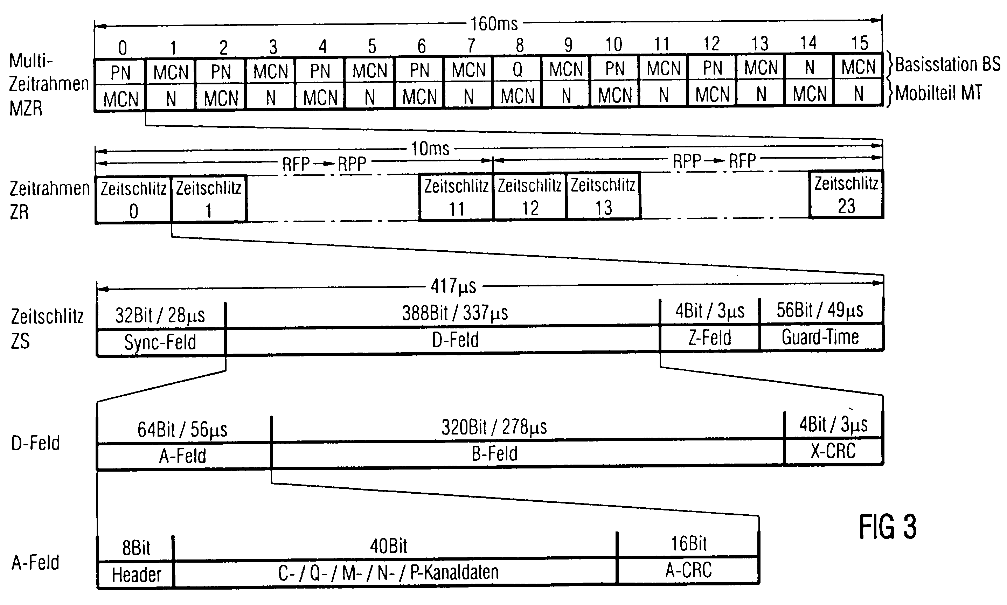

FIG 3 zeigt in Anlehnung an die Druckschrift "Nachrichtentechnik Elektronik 42, 1992 Januar/Februar, Nr. 1, Berlin, U. Pilger: "Struktur des DECT-Standards", Seiten 23 bis 29 in Verbindung ETS 300175-1..9, Oktober 1992, die TDMA-Struktur (Time Division Multiple Access) eines bekannten DECT/GAP-Systems.

Das DECT/GAP-System ist ein bezüglich der Vielfachzugriffsverfahren hybrides System, bei dem nach dem FDMA-Prinzip (Frequency Division Multiple Access) auf 10 Frequenzen im Frequenzband zwischen 1,88 und 1,90 GHz Funknachrichten nach dem TDMA-Prinzip in einer vorgegebenen zeitlichen Abfolge von einer Funkbasisstation RFP zu einem Funk-Mobil-Teil RPP und von einem Funk-Mobil-Teil RPP zu einer Funkbasisstation RFP (Duplex-Betrieb) gesendet werden kann.

Die zeitliche Abfolge wird dabei von einem sogenannten Multi-Zeitrahmen MZR bestimmt, der alle 160 msec beginnt und 160 msec lang ist. Ein Multi-Zeitrahmen weist 16 Zeitrahmen ZR mit jeweils einer Zeitdauer von 10 msec auf. In jedem Zeitrahmen ZR werden nach Funk-Fest-Teil RFP und Funk-Mobil-Teil RPP getrennt, Informationen übertragen, die einen im DECT-Standard definierten C-, M-, N-, P-, Q-Kanal betreffen. Jeder der 16 Zeitrahmen ZR eines Multi-Zeitrahmens MZR unterteilt sich wiederum in 24 Zeitschlitze ZS (mit jeweils einer Zeitdauer von 417 µsec), von denen 12 Zeitschlitze (ZS0,..,ZS11) für die Übertragungsrichtung von dem Funk-Fest-Teil RFP zum Funk-Mobil-Teil RPP und weitere 12 Zeitschlitze ZS (ZS12,..,ZS23) für die Übertragnngsrichtung vom Funk-Mobil-Teil RPP zum Funk-Fest-Teil RFP bestimmt sind.

In jedem dieser Zeitschlitze ZS werden nach dem DECT-Standard für einen sogenannten 'full slot' 480 Bit-Informationen übertragen. Von diesen 480 Bit werden 32 Bit als Synchronisationsinformation in einem 'SYNC-Feld' und 388 Bit als Nutzinformation in einem 'D-Feld' übermittelt. Die restlichen 60 Bit werden als Redundanzinformationen in einem 'Z-Feld' (4 Bit) und als Füllinformation in einem 'Guard-Period-Feld' (56 Bit) übertragen. Die als Nutzinformation übertragenen 388 Bit des 'D-Feldes' unterteilen sich wiederum in ein 64 Bit langes 'A-Feld', ein 320 Bit langes 'B-Feld' und in ein 4 Bit langes 'X-CRC-Wort'. Das 64 Bit lange 'A-Feld' setzt sich aus einem 8 Bit langen Datenkopf (Header), einem 40 Bit langen Datensatz mit Daten für die C-, Q-, M-, N-, P-Kanäle und einem 16 Bit langen 'A-CRC-Wort' zusammen.

Außer einer 'Datenportionierung' in 'full slots' sieht der DECT-Standart u.a. auch eine Datenübermittlung mittels 'double slots' (nicht dargestellt) vor, bei der zwei Zeitschlitze zusammengefaßt sind, so daß das 'B-Feld' eines ersten Zeitschlitzes um die Länge eines zweiten Zeitschlitzes verlängert ist und damit 800 Bit (es wird das 'Guard-Period-Feld' zwischen den Zeitschlitzen mitgenutzt d.h. 320 + 480 = 800 Bit) umfaßt. Ein derartiger 'double slot' ist aufgrund seiner großen Datenkapazität zur Übertragung der Kanalinformationen eines 64 kbit/sec ISDN-B-Kanals besonders geeignet.

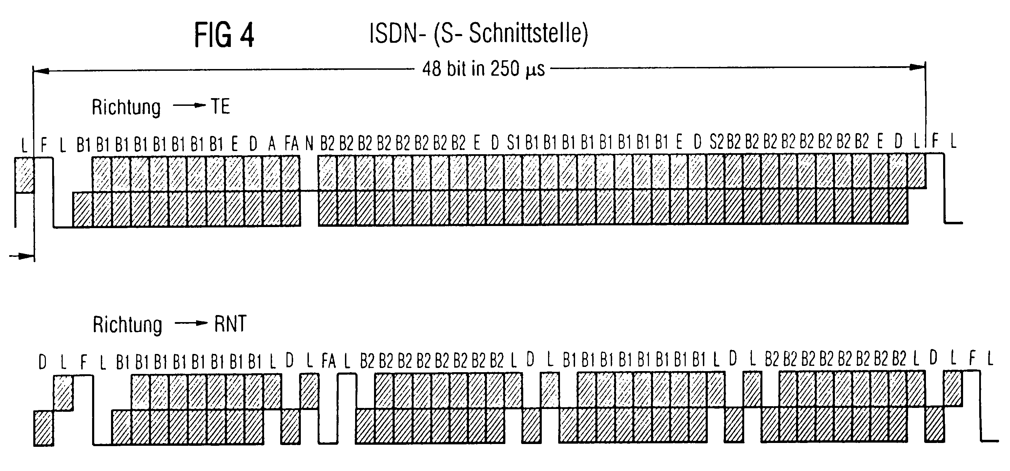

In FIG 4 ist der Aufbau eines Informationsrahmens an einer S/T-Schnittstelle, die auch als ISDN-S0-Schnittstelle bezeichnet wird, dargestellt. Die Lage des Rahmens, d.h. der Beginn eines jeweiligen Rahmens, wird durch die 'F-Bits' erkannt. Mit B1, B2 sind jeweils Bits im B1- bzw. B2-Kanal bezeichnet. Mit D ist ein Bit im D-Kanal, mit E ein Bit im D-Echo-Kanal, mit FA ein zusätzliches Rahmenbit, mit L ein Ausgleichsbit und mit S1, S2 sind Füllbits bezeichnet.

Ein Informationsrahmen der ISDN-S0-Schnittstelle beinhaltet also 48 Bit, die in der Zeit von 250 µsec übertragen werden; Die Bitfrequenz der ISDN-S0-Schnittstelle ist damit 192 kbit/sec und die Rahmenfrequenz beträgt 400 Rahmen pro Sekunde.

Ein ISDN-B-Kanal hat eine Informationsdichte von 64 kbit/sec und ein ISDN-D-Kanal 16 kbit/sec. Das bedeutet, daß bei der Übertragung eines B-Kanals über eine DECT-Luftschnittstelle, die eine Multi-Zeitrahmenfrequenz von 6,25 Multi-Zeitrahmen pro Sekunde hat, pro Multi-Zeitrahmen 10240 Bits und bei der Übertragung eines D-Kanals 2560 Bits zu übertragen sind. Für einen ISDN-B-Kanals weden in jedem Multi-Zeitrahmen MZR alle 16 Zeitrahmen ZR mit jeweils einem 'double slot' belegt.

In der Funknetzabschlußeinrichtung RNT werden die übermittelten und zu einer ISDN-Verbindung gehörenden kanalbezogenen Informationsströme (2B+D) aus den DECT-Zeitrahmen entnommen und zeitgerecht, d.h. in die ISDN-Rahmen des ISDN-S0-Informationsstromes (ISDN-S0-Anschluß) zusammengeführt.

Um eine derartige Umsetzung serieller Datenströme aus dem "DECT-Zeitraster" in einen seriellen Datenstrom eines "ISDN-Zeitrasters" vornehmen zu können, werden die Zeitraster nicht starr und voneinander unabhängig, sondern zueinander synchron gebildet. Zusätzlich wird eine Kompensation des 'DECT-Jitters' auf der Luftschnittstelle vorgenommen, um die strengen 'ISDN-Jitter-Anforderungen' zu erfüllen.

Da in der Funknetzabschlußeinrichtung RNT der ISDN-Zeittakt für die ISDN-S0-Schnittstelle - also im wesentlichen der Beginn eines jeweiligen Rahmens, mit der darin befindlichen Bitfolge wie in der Fig dargestellt - generiert wird, ist in der Funknetzabschlußeinrichtung RNT dieser ISDN-Zeittakt auf das DECT-Zeitraster zu synchronisieren.

Die Synchronisierung erfolgt anhand der Eintreffzeitpunkte der zum Transport der betreffenden ISDN-Kanalinformation relevanten Zeitschlitze ZS , wobei - wie bereits erwähnt - ein 'double slot', pro DECT-Zeitrahmen ZR belegt wird. Der betreffende 'double slot' nimmt innerhalb der Zeitrahmen ZR stets die gleiche Position, z.B. die der ersten beiden Zeitschlitze ZS0,ZS1, ein. Der Eintreffzeitpunkt wird jeweils anhand des den Beginn des Zeitschlitzes anzeigenden 'Sync-Feldes' erkannt; bei einem die ersten beiden Zeitschlitze ZS0,ZS1 eines Zeitrahmens ZR belegenden 'double slot' wird der Eintreffzeitpunkt durch das den ersten Zeitschlitz ZS0 einleitende 'Sync-Feld' erkannt.

Konkret bedeutet dies, daß alle 10 msec, also mit jedem Zeitrahmen ZR eine Synchronisationsinformation eintrifft.

Bei dem bekannten Aufbau von ISDN-Verbindungen über ein RLL/WLL-System werden die zu einer ISDN-Verbindung gehörenden Kanalinformationen von einer gemeinsamen Funkbasisstation RBS aus zur betreffenden Funknetzabschlußeinrichtung RNT übermittelt. Da die Kanalinformationen (2B+D) zueinander synchron abgesendet werden - in den gleichen Zeitschlitzpositionen im Zeitrahmen , aber über verschiedene DECT-Funkkanäle - kommen sie auch synchron bei der Funknetzabschlußeinrichtung RNT an und können ohne weiteres zu einem ISDN-S0-Informationsstrom zusammengefügt werden. Auch die von der gemeinsamen Funkbasisstation RBS eintreffenden Synchronisationsinformationen (Beginn der relevanten Zeitschlitze) können ohne weiteres im obigen Sinne zur Synchronisation der ISDN-S0-Schnittstelle herangezogen werden.

In dem für die Erfindung bedeutsamen Falle, daß die zu einer ISDN-Verbindung gehörenden Kanalinformationen (2B+D) über wenigstens zwei verschiedene Funkbasisstationen RBS übermittelt werden, kann jedoch - vor allem aufgrund der unterschiedlichen Entfernungen der Funkbasisstationen RBS zur Funknetzabschlußeinrichtung RNT - ein zeitlicher Versatz zwischen dem Eintreffen der von verschiedenen Funkbasisstationen RBS übermittelten relevanten Zeitschlitze auftreten. Daraus folgt weiter, daß auch ein zeitlicher Versatz zwischen den zu einer ISDN-Verbindung gehörigen Kanalinformationen (2B+D) auftritt, der ein einfaches Zusammenfügen der Kanalinformationen zu einem ISDN-S0-Informationsstrom unmöglich macht.

Bei einem zeitversetzten Eintreffen der von verschiedenen Funkbasistationen übermittelten relevanten Zeitschlitzen stellt sich das Problem, welche der Eintreffzeitpunkte zur Synchronisation der ISDN-S0-Schnittstelle verwendet werden soll, also welche Funkbasisstation mit ihren Zeitschlitzen letztendlich die ISDN-S0-Schnittstelle synchronisieren soll.

Eine Weiterbildung des erfindungsgemäßen Verfahrens sieht nun vor, daß diejenige Funkbasisstation RBS, welche die längste Signallaufzeit zur Funknetzabschlußeinrichtung RNT aufweist, ausgewählt wird, um durch den jeweiligen Beginn der von ihr empfangenen relevanten Zeitschlitze die ISDN-S0-Schnittstelle zu synchronisieren.

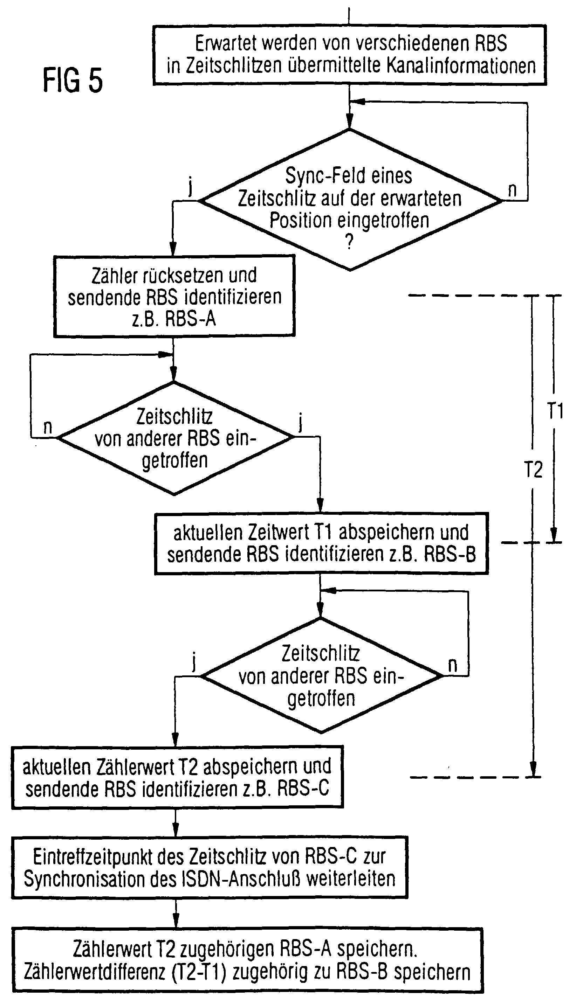

In FIG 5 ist ein Ablaufdiagramm für ein nach dieser Weiterbildung ausgestaltetes Verfahren angegeben.

Das Verfahren wird in der Schnittstellenschaltung INC2 der Funknetzabschlußeinrichtung RNT von einem entsprechend programmierten Mikro-Controller bzw. einer entsprechenden Hardwaresteuerung durchgeführt. In dem Verfahren werden wenigstens die Funkbasisstationen berücksichtigt, die vorgesehen sind, um die zu einer ISDN-Verbindung gehörenden Kanalinformationen zu übertragen. Im Beispiel sind dafür 3 Funkbasisstationen RBS-A, RBS-B und RBS-C für die getrennte Übertragung der beiden Nutzkanäle (2B) und des Signalisierungskanal (D) vorgesehen.

Nachdem von jeder der drei beteiligten Funkbasisstationen RBS-A,..,RBS-C die Verbindung eingerichtet und Beteiligung an einer gemeinsamen ISDN-Verbindung der Funknetzabschlußeinrichtung RNT mitgeteilt wurde, wird das Eintreffen eines nächsten, von einer der drei beteiligten Funkbasisstationen RBS-A,.., RBS-C stammenden, zur Übermittlung der Kanalinformationen vereinbarten Zeitschlitzes ('double slot') erwartet. Für die Kanalinformationen werden dabei von den Funkbasisstationen die gleichen Zeitschlitzpositionen (z.B. ZS0 und ZS1) innerhalb eines jeweiligen Zeitrahmens ZR verwendet.

Sobald der erste relevante Zeitschlitz von einem der drei Funkbasisstationen eingetroffen ist, wird ein interner Zähler gestartet; d.h. dieser interne Zähler beginnt mit einer ihm zugeführten Taktfrequenz, z.B. mit der DECT-Taktrate von 1,152 MHz, seine Zählwerte schrittweise zu erhöhen. Außerdem wird diejenige Funkbasisstation RBS-A identifiziert, von der dieser erste relevante Zeitschlitz (unter einem Zeitschlitz soll auch ein 'double slot' verstanden werden) stammt.

Sobald ein weiterer relevanter Zeitschlitz von einer der beiden anderen Funkbasisstationen RBS-B, RBS-C eingetroffen ist, wird der beim Eintreffen des Zeitschlitzes am internen Zähler vorliegende aktuelle Zählerwert T1 abgespeichert und die den eingetroffenen Zeitschlitz sendende Funkbasisstation RBS-B identifiziert.

Sobald von der verbleibenden Funkbasisstation RBS-C der relevante Zeitschlitz eingetroffen ist, wird der beim Eintreffen dieses Zeitschlitzes am internen Zähler vorhandene aktuelle Zählerwert T2 abgespeichert und in einer, derjenigen Funkbasisstation RBS-A, von welcher der erste relevante Zeitschlitz eingetroffen ist, zugeordneten Speicherzelle als funkbasisstationsindividueller Differenzwert (T2) abgespeichert.

Zudem wird ein aus dem Zählerwert T2 und dem Zählerwert T1 gebildeter Differenzwert in einer der Funkbasisstation RBS-B, von welcher der zweite relevante Zeitschlitz eingetroffen ist, zugeordneten Speicherzelle als funkbasisstationsindividueller Differenzwert abgespeichert.

Die Basisstation RBS-C, von welcher der als letztes eingetroffene relevante Zeitschlitz übermittelt wurde, wird zur Synchronisation des ISDN-S0-Anschlusses ausgewählt, d.h. mit Eintreffen der von dieser Funkbasisstation RBS-C eintreffenden relevanten Zeitschlitze (alle 10 msec) werden jeweils eine Folge von 40 ISDN-Rahmen zur Ausgabe an die ISDN-S0-Schnittstelle freigegeben.

Beim Eintreffen einer nächsten Sequenz von relevanten Zeitschlitzen (also genau nach (10ms-T2)) wird die von der Basisstation RBS-A in dem Zeitschlitz übermittelte Information zunächst in einen Daten-Zwischenspeicher gespeichert und erst nach einer durch den dieser Funkbasisstation RBS-A zugehörigen funkbasisstationsindividuellen Differenzwert (T2) vorgegebenen Verzögerungszeit ausgespeichert. Ebenso wird die von der Funkbasisstation RBS-B übermittelte Information für die durch den ihr zugeordneten funkbasisstationsindividuellen Differenzwert (T2-T1) vorgegebenen Verzögerungszeit zwischengespeichert. Der funkbasisstationsindividuelle Differenzwert für die Funkbasisstation RBS-C ist dabei gleich Null.

Auf diese Weise werden die Laufzeitunterschiede zwischen der Funkbasisstation RBS-C und den anderen Funkbasisstation RBS-A und RBS-B kompensiert, und die Kanalinformationen (2B+D) können in den ISDN-S0-Informationsstrom so zusammengefügt werden, als seien die Kanalinformationen alle von der gleichen Funkbasisstation übermittelt worden.

Die Verfahrensschritte zur Ermittlung der den ISDN-S0-Anschluß synchronisierenden Funkbasisstation RBS-C und zur Ermittlung der funkbasisstationsindividuellen Differenzwerte können bei jedem Eintreffen einer Sequenz von relevanten Zeitschlitzen ausgeführt werden, damit Änderungen sofort erkannt werden und die gespeicherten funkbasisstationsindividuellen Differenzwerte jeweils den aktuellsten Unterschied der Laufzeitunterschiede repräsentieren.

Durch ein Abspeichern von funkbasisstationsindividuellen Differenzwerten, läßt es sich auch vermeiden, daß ein Ausfall der die ISDN-S0-Schnittstelle synchronisierenden Funkbasisstation RBS-C zu Synchronisationsfehlern im ISDN-S0-Informationsstrom führt, weil der Eintreffzeitpunkt des von der den ISDN-S0-Anschluß synchronisierenden Funkbasisstation RBS-C übermittelten Zeitschlitzes anhand eines Eintreffzeitpunktes eines von einer anderen Funkbasisstation stammenden Zeitschlitzes und dem dieser anderen Funkbasisstation zugehörigen funkbasisstationsindividuellen Differenzwert errechnet werden kann. Falls erforderlich kann die Berechnung auch unter Einbeziehung mehrerer anderer Funkbasisstationen und den diesen zugehörigen funkbasisstationsindividuellen Differenzwerten erfolgen, wobei sich der errechnete Eintreffzeitpunkt durch Mittelwertbildung gewinnen läßt.

Mit einer zusätzlichen Weiterbildung des Verfahrens ist noch ein wesentlicher Vorteil erzielbar, der dann zum Tragen kommt, wenn die Funknetzabschlußeinrichtung RNT kurzzeitig einen "schlafenden Zustand" eingenommen hat. Der "schlafende Zustand" bedeutet, daß nicht alle 10 msec, sondern seltener, z.B. pro DECT-Multi-Zeitrahmen nur einmal (durch das Multi-Zeitrahmensignal), eine Synchronisationsinformation übermittelt wird.

Die Funknetzabschlußeinrichtung RNT weist nämlich pro in Verbindung stehende Funkbasisstation RBS eine interne Takterzeugungseinrichtung auf, um zeitgerecht in den Zeitschlitzen ZS12 bis ZS23 eines DECT-Zeitrahmens ZR Informationen an die Funkbasisstation RBS übermitteln zu können. Diese Takterzeugungseinrichtung wird im 'normalen Zustand' z.B. bei einer bestehenden Teilnehmerverbindung, von der Funkbasisstation RBS ständig durch die Eintreffzeitpunkte der Zeitschlitze nachgeregelt, d.h. synchronisiert.

Sobald die Funknetzabschlußeinrichtung einen 'schlafenden Zustand' einnimmt, kann die Takterzeugungseinrichtung mangels eintreffender Zeitschlitze (also 'Sync-Felder') nicht mehr mit jedem Zeitschlitz nachgeregelt werden und sie wird allmählich asynchron zum Takt der Funkbasisstation RBS. Dies bedeutet, daß im Falle einer Wiederaufnahme des 'normalen Zustandes' die Funknetzabschlußeinrichtung RNT nicht mehr synchron zur Funkbasisstation RBS ist und eventuell erneut ein grundsätzlicher Verbindungsaufbauvorgang mit der Funkbasisstation RBS eingeleitet werden muß, mit dem die Takterzeugungseinrichtung der Funknetzabschlußeinrichtung RNT wieder synchronisiert wird.

Ein neuer grundsätzlicher Verbindungsaufbauvorgang aufgrund eines Asynchronwerdens kann dadurch vermieden werden, daß wahrend des 'normalen Zustandes' ein Taktabweichungsfaktor - auch Drift genannt - zwischen dem durch das Eintreffen der Zeitschlitze definierten Takt und dem von der internen Takterzeugungseinrichtung gebildeten Takt jeweils im Zuge einer Synchronisation der internen Takterzeugungseinrichtung gemessen und in Form eines entsprechenden Wertes abgespeichert wird. Mit Hilfe des gespeicherten Taktabweichungsfaktors - der funkbasisstationsindividuell ermittelt und abgespeichert ist - kann die interne Takterzeugungseinrichtung bezogen auf eine jeweilige Funkbasisstation rechnerisch synchronisiert werden, in dem der betreffende funkbasisstationsindividuelle Taktabweichungsfaktor bei der von der internen Takterzeugungseinrichtung gebildeten Taktinformation berücksichtigt wird.

## Patentansprüche

1. Verfahren zum Synchronisieren einer Funkempfangseinrichtung, insbesondere einer Funknetzabschlußeinrichtung (RNT) eines in einem ISDN-System eingebundenen RLL/WLL-Systems (Radio in the Local Loop/Wireless in the Local Loop), wobei die Funkempfangseinrichtung mit einem in Bezug auf empfangene Synchronisationsinformationen zu synchronisierenden ISDN-Anschluß versehen ist und von einer Funkbasisstation (RBS-A) über eine Luftschnittstelle (DECT) wenigstens eine ISDN-Kanalinformation (B;D)empfängt,
**dadurch gekennzeichnet,**
daß wenigstens eine zur selben ISDN-Verbindung gehörende weitere ISDN-Kanalinformation (B;D) von wenigstens einer mit der Funkbasisstation (RBS-A) synchronen weiteren Funkbasisstation (RBS-B, RBS-C) an die Funkempfangseinrichtung übertragen wird,
daß in der Funkempfangseinrichtung zur Synchronisierung des ISDN-Anschlusses eine Referenz-Synchronisationsinformation ermittelt wird, die derart gewählt ist, daß keine der von den Funkbasisstationen (RBS-A,RBS-B,RBS-C) empfangenen Synchronisationsinformationen dieser zeitlich nachfolgen,
daß zwischen der Referenz-Synchronisationsinformation und den jeweiligen empfangenen Synchronisationsinformationen vorhandene zeitliche Abstände ermittelt und in Form von funkbasisstationsindividuellen Differenzwerten gespeichert werden und
daß die von den Funkbasisstationen (RBS-A,RBS-B,RSB-C) übertragenen Kanalinformationen (B;D) jeweils für eine sich aus dem der betreffenden Funkbasisstation (RBS-A;RBS-B) zugeordneten funkbasisstationsindividuellen Differenzwert ergebende Differenzzeit zwischengespeichert und danach zusammengeführt und an den ISDN-Anschluß weitergeleitet werden.

2. Verfahren nach Anspruch 1,
**dadurch gekennzeichnet,**
daß als Referenz-Synchronisationsinformation die Synchronisationsinformation derjenigen Funkbasisstation (RBS-C) gewählt wird, deren übertragene Informationen (B;D) gegenüber den von den anderen Funkbasisstationen (RBS-A,RBS-B) übertragenen Informationen (B;D) die längste Laufzeit aufweisen.

3. Verfahren nach einem der vorhergehenden Ansprüche,
**dadurch gekennzeichnet,**
daß die Luftschnittstelle eine nach dem DECT-Standard ausgestaltete Luftschnittstelle ist.

4. Verfahren nach Anspruch 3,
**dadurch gekennzeichnet,**
daß Eintreffzeitpunkte von DECT-Zeitschlitzen (ZS) als Synchronisationsinformation behandelt werden.

5. Verfahren nach Anspruch 3 oder 4,
**dadurch gekennzeichnet,**
daß eine interne Takterzeugungseinrichtung durch das Eintreffen von Zeitschlitzen synchronisiert wird, wobei ein Taktabweichungsfaktor ermittelt und gespeichert wird.

6. Verfahren nach Anspruch 5,
**dadurch gekennzeichnet,**
daß bei Ausbleiben eintreffender Zeitschlitze eine Synchronisierung der internen Takterzeugungseinrichtung anhand des gespeicherten Taktabweichungsfaktors erfolgt.

7. Verfahren nach Anspruch 5,
**dadurch gekennzeichnet,**
daß die Ermittlung des Taktabweichungsfaktors wiederholt durchgeführt wird.

8. Verfahren nach einem der vorhergehenden Ansprüche,
**dadurch gekennzeichnet,**
daß die Ermittlung der funkbasisstationsindividuellen Differenzwerte wiederholt durchgeführt wird.

9. Verfahren nach einem der vorhergehenden Ansprüche,
**dadurch gekennzeichnet,**
daß der ISDN-Anschluß ein ISDN-S0-Anschluß ist.

10. Verfahren nach einem der vorhergehenden Ansprüche,
**dadurch gekennzeichnet,**
daß der ISDN-Anschluß ein ISDN-S2M-Anschluß ist.
